# EUROPEAN PATENT APPLICATION

(11) **EP 1 118 485 A1**
(43) Date of publication of application: **25.07.2001**
(21) Application number: 01200053.5
(22) Date of filing: 09.01.2001
(51) Int. Cl.: B60J 7/00

(54) **Open roof construction for a vehicle**

(30) Priority: 19.01.2000 NL 1014111
(71) Applicant: Inalfa Industries B.V., 5804 AB Venray (NL)
(72) Inventor: Manchette, Jean Baptiste, Leicestershire LE2 1HA (GB)
(74) Representative: Voncken, Bartholomeus Maria Christiaan

(57) **Abstract**

The invention relates to an open roof construction for a vehicle, comprising a roof opening (1) formed in the roof of the vehicle, a frame (2) fitted round said roof opening (1) and a sun screen device positioned under the plane of the roof opening, which sun screen device comprises a flexible cloth (6) which is capable of forward and backward movement in directions substantially parallel to the roof opening, a winding shaft (5) for winding and unwinding said cloth (6) and frame-mounted guides for the side edges of said cloth. The winding shaft (5) is mounted on a frame extension connected to the frame, substantially outside the projection of the frame, wherein two pivoting arms (7) are connected to said frame extension, which pivoting arms (7) include guide elements (8) for the side edges of the cloth (6). The pivoting arms (7) are capable of pivoting movement between an operating position, in which the guide elements are arranged in line with said guides, substantially connecting thereto, and a mounting position, in which said guide elements (8) are disposed outside the projection of the frame.

## Description

The invention relates to an open roof construction for a vehicle, comprising a roof opening formed in the roof of the vehicle, a frame fitted round said roof opening and a sun screen device positioned under the plane of the roof opening, which sun screen device comprises a flexible cloth which is capable of forward and backward movement in directions substantially parallel to the roof opening, a winding shaft for winding and unwinding said cloth and frame-mounted guides for the side edges of said cloth.

With open roof constructions of the aforesaid type it is desirable to make the effective roof opening as large as possible. This means that the sun screen device should overlap the roof opening as little as possible in its completely open position. This can be achieved by positioning the winding shaft for the cloth outside the projection of the roof opening. However, this involves the problem that the winding shaft and/or the cloth partially cover(s) the frame, so that it is not possible to gain access, or only with great difficulty, to fixing means for the frame (such as screws, bolts and the like) that are present at that location. This makes it very difficult to fit the frame round the roof opening.

It is an object of the present invention to provide a solution for the above problem.

In order to accomplish that objective, the open roof construction according to the invention is characterized in that the winding shaft is mounted on a frame extension connected to the frame, substantially outside the projection of the frame, wherein two pivoting arms are connected to said frame extension, which pivoting arms include guide elements for the side edges of the cloth and which are capable of pivoting movement between an operating position, in which the guide elements are arranged in line with said guides, substantially connecting thereto, and a mounting position, in which said guide elements are disposed outside the projection of the frame.

When the open roof construction according to the invention is to be mounted in the roof of a vehicle, and in particular the frame is to be fitted round the roof opening, the cloth is wound onto the winding shaft so far that the free front edge of the cloth remote from said winding shaft is positioned at the location of the guide elements of the pivoting arms. The cloth is completely clear of the guides mounted on the frame in that position, and pivoting of the pivoting arms to the mounting position is possible. In the mounting position of the pivoting arms the guide elements, and consequently also the cloth accommodated therein, are disposed outside the projection of the frame (and in particular the frame portion directly adjacent to the frame extension), so that also the fixing means present in or on the frame at that location are readily accessible. After the frame has been fitted at that location with the aid of the fixing means, the pivoting arms can be pivoted to their operating position, in which the guide elements thereof connect to the guides, and the cloth can be inserted into the guides with its side edges from the guide elements, so that the cloth will be capable of performing its function as a sun screen.

The use of the frame extension provides a significant additional advantage. In many cases a stiffening section is fitted at the location of the edge of the roof opening where the winding shaft is positioned. In that case the frame extension makes it possible to mount the winding shaft on the side of said stiffening section remote from the roof opening, and only the cloth needs to pass under said section. The overall height is thus minimized, whilst it is furthermore possible, by suitably selecting the length of the frame extension, to allow for various positions of the stiffening section with various car types.

In one embodiment of the open roof construction according to the invention, wherein the free front edge of the cloth (as is generally usual) includes a stiff end portion, it is preferable to provide the guide elements of the pivot arms with stops for the end portion. Said stops determine the position of the cloth, in which position said cloth is wound onto the winding shaft to its maximum extent, and in which position pivoting from the operating position to the mounting position is possible. The use of said stops makes it considerably easier to manipulate the cloth in combination with the pivoting arms.

Within this framework it is also preferable in that case that the position of the stops is such that the end portion and/or the cloth substantially cover(s) the frame portion directly adjacent to the frame extension in the operating position of the pivoting arms. In this manner it is cleverly ensured that the fixing means present in said frame portion will be hidden from view at all times in the operating position of the pivoting arms.

In accordance with another embodiment of the open roof construction according to the invention, which can be used advantageously, the pivoting arms are also movable with respect to the frame extension between a first position, in which the guide elements thereof connect to the guides, and a second position, in which the guide elements are clear of the guides. In said first position a strong interconnection is provided between the guide elements of the pivoting arms and the guides present on the frame, so that an optimum guidance of the side edges of the cloth is ensured at all times, also at the location of the transition between the guide elements and the guides. In the second position, on the other hand, the guide elements are disconnected from the guides, as it were, so that nothing stands in the way of simply pivoting the pivoting arms from the operating position to the mounting position (and vice versa).

Naturally, suitable means, such as snap means or the like, may be provided to ensure a proper interconnection between the guide elements and the guides in the operating position.

It may be advantageous from a constructional point of view if the pivoting arms can be detached from the frame extension. Constructionally this could be achieved in that the pivoting arms and the frame extension are provided with mating hook means.

If the pivoting arms can indeed be detached from the frame extension, it is furthermore preferable for the hook means to be so constructed that it is only possible to detach the pivoting arms from the frame extension or connect the pivoting arms thereto if the angle between the pivoting arms and the plane of the frame exceeds a predetermined value. This prevents the pivoting arms from being detached from the frame unintentionally when the former are pivoted to the mounting position with respect to the latter. It is in particular advantageous if said angle is at least 90 . An angle of 90 substantially corresponds to the position in which the pivoting arms project downwards with respect to the frame, that is, a natural position which the pivoting arms take up together with the respective part of the cloth under the influence of the force of gravity. In such a position the pivoting arms must of course be prevented from becoming detached from the frame extension prematurely. When said angle is at least 90 , the pivoting arms must be pivoted further beyond their natural lowermost position, against the force of gravity, before they can be detached from the frame extension.

The open roof construction according to the invention provides a number of significant advantages. Fixing means for fitting the frame round the roof opening can be made readily accessible. The same holds for frame types that consist of an upper frame and a lower frame. In principle, the frame extension and the pivoting arms connected thereto form part of the frame, thus minimizing the number of parts and the number of mounting steps required for mounting said parts. A maximum effective roof opening is obtained by mounting the winding shaft outside the projection of the frame.

The invention will now be explained in more detail with reference to the drawing, which shows an embodiment of the open roof construction according to the invention.
Figure 1 is a perspective view of a part of an embodiment of the open roof construction according to the invention; and
Figures 2 - 5 are larger-scale side views of a detail of the open roof construction of Figure 1, showing four different positions thereof.

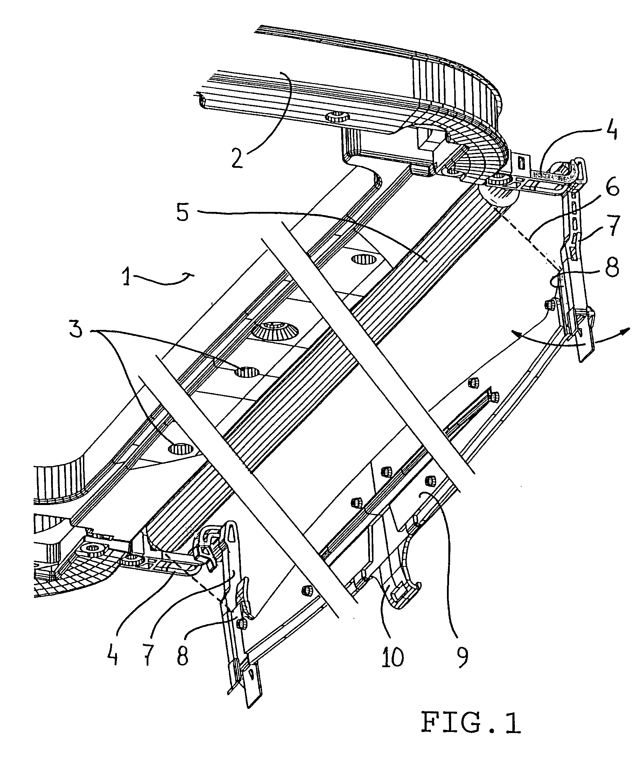

Referring to Figure 1, there is shown a part of an open roof construction for a vehicle. A roof opening 1 is formed in the roof (not shown) of a vehicle, around which opening a frame 2 has been fitted. Generally, and as is usual, such a frame 2 consists of a frame part disposed substantially under the roof of the vehicle and a frame part disposed thereabove. The two frame parts can be interconnected by fixing means, such as screws, bolts, snap means or the like, thereby confining the roof opening edges between them, so as to form frame 2. Recesses or openings 3 may be formed in frame 2 for receiving such fixing means.

Frame 2 includes a frame extension, which consists of two arms 4 in the illustrated embodiment. A winding shaft 5 for a cloth 6 is attached to said arms 4. Winding shaft 5 can be spring-loaded, in a manner which is known per se, in a direction for winding the cloth 6.

As is clearly shown in Figure 1, winding shaft 5 is positioned outside the vertical projection of frame 2. The effect that is achieved therewith will become apparent hereinafter.

Pivoting arms 7 engage the ends of arms 4. Said pivoting arms 7 are provided with guide elements 8 for the side edges of cloth 6. Guide elements 8 may be fitted with stops (not shown in the figure), which are capable of engaging a stiff end portion 9 that is connected to the free front edge of cloth 6. Such an end portion 9, which includes a handle 10, can be taken hold of by a user for the purpose of passing the cloth 6 under roof opening 1, by unwinding said cloth from the winding shaft, to a completely or partially closed position. The aforesaid stops define the end position of the end portion 9 in the most open position of the sun screen device formed by cloth 6 and winding shaft 5. A special effect of said stops will become apparent hereinafter.

When cloth 6 is passed under roof opening 1 by moving end portion 9, the edges of cloth 6 will be guided in guides mounted on frame 2 (not shown in the figure).

In the position of pivoting arms 7 that is shown in Figure 1, which position is called the mounting position, the guide elements 8 of the pivoting arms 7 are disposed outside the projection of the frame 2. Cloth 6 is also present outside said projection in that case, and since the winding shaft 6 is also disposed outside the projection of frame 2, as has been mentioned before, the recesses or openings 3 and the fixing means that are to be fitted therein or that are present therein will be accessible in the mounting position. This means that frame 2 (or a lower frame part) can be mounted in the roof of a vehicle with the winding shaft 5 and the pivoting arms already in place, as a result of which the mounting process is simplified and mounting will take less time.

The pivoting arms 7 can pivot with respect to arms 4 to a position, called the operating position, in which their guide elements 8 are in line with and substantially connect to the guides (not visible) that are mounted on frame 2. In Figure 1 this position is a position in which the pivoting arms extend substantially parallel to the plane of frame 2. The pivoting movement from the mounting position that is shown in Figure 1 takes place in clockwise direction.

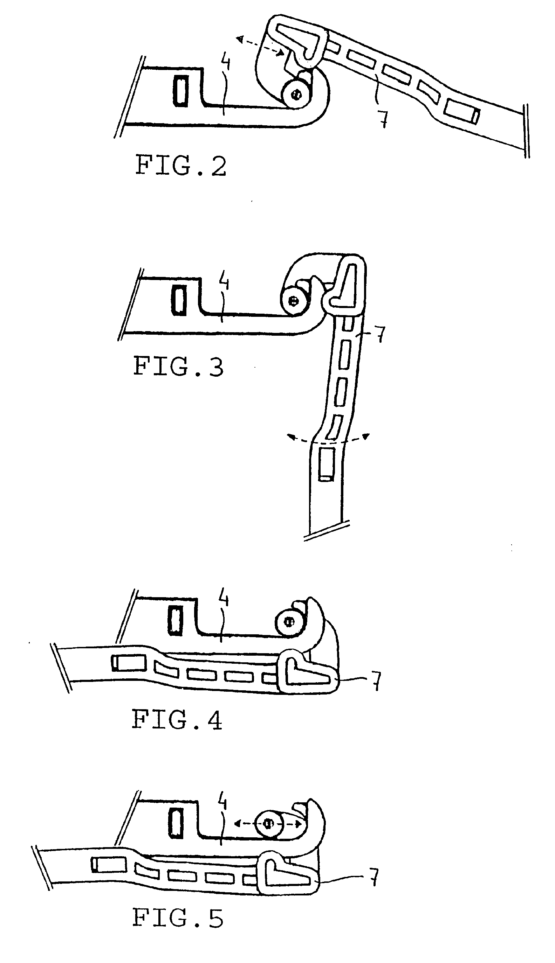

In the illustrated embodiment of the open roof construction the pivoting arms 7 can be detached from the frame extension that is formed by arms 4. Pivoting arms 7 and arms 4 are to this end fitted with mating hook means. For a more detailed explanation, reference is made to Figures 2 - 5.

Figure 2 shows a position of a pivoting arm 7 with respect to an arm 4, in which position the end of the pivoting arm 7 can be hooked into the end of arm 4 or be released therefrom.

Starting from the position that is shown in Figure 2, the position shown in Figure 3 is reached by pivoting the pivoting arm 7 in clockwise direction. Generally this is the position that a pivoting arm 7 will take up under the influence of the force of gravity, that is, substantially in the position that is shown in Figure 1 (the mounting position).

Continued pivoting of pivoting arm 7 leads to the position that is shown in Figure 4, in which position the pivoting arm 7 extends substantially parallel to the plane of frame 2.

As is shown in Figure 5, pivoting arm 7 is capable of sliding movement with respect to the associated arm 4, starting from the position that is shown in Figure 4. In the position that is shown in Figure 4 the guide element mounted on pivoting arm 7 and the corresponding guide on frame 2 are clear of each other, which is generally a precondition for enabling pivoting movement of pivoting arm 7 with respect to arm 4. In the position that is shown in Figure 5, however, said guide element 8 and the guide in question will be connected to each other (for example by means of a snap fit), so that on the one hand the pivoting arm 7 is locked in position whilst on the other hand continuous guidance for the side edges of the cloth 6 is provided.

Returning to the aforesaid stops on guide elements 8, it can be noted that the position of said stops has been so selected that when the movement of end portion 9 is arrested by said stops, end portion 9 will be positioned in guide elements 8 in its entirety, leaving clear the transition between said guide elements 8 and the guides connecting thereto, thus enabling pivoting movement of the pivoting arms 7, should this be desired. The position of said stops is also such, however, that the end portion 9 and/or the cloth 6 cover the frame portion adjacent to arms 4 (the frame portion provided with the recesses or openings) in the operating position of the pivoting arms 7 (in principle the position that is shown in Figure 5), as a result of which fixing means that mar the appearance will remain hidden from view in any position of cloth 6.

The mating ends of arms 4 and pivoting arms 7 are constructed in such a manner that the pivoting arms 7 can only be detached from arms 4 if the angle between pivoting arms 7 and the plane of the frame 2 exceeds a predetermined value. In this manner unintentional detachment of the pivoting arms 7 from arms 4 is avoided. By ensuring that said angle is at least 90 , it becomes possible to prevent a situation wherein the natural position (as shown in Figure 1) already leads to said parts becoming detached from each other.

Because the pivoting arms 7 are used, it is possible to mount the sun screen device consisting of winding shaft 5 and cloth 6 on the frame already before said frame is fitted in the roof of a vehicle. As a result of this, the number of parts to be fitted when mounting an open roof construction according to the invention will be minimized.

The invention is not limited to the embodiment as described above, which can be varied in several ways without departing from the scope of the claims.

## Claims

1. An open roof construction for a vehicle, comprising a roof opening formed in the roof of the vehicle, a frame fitted round said roof opening and a sun screen device positioned under the plane of the roof opening, which sun screen device comprises a flexible cloth which is capable of forward and backward movement in directions substantially parallel to the roof opening, a winding shaft for winding and unwinding said cloth and frame-mounted guides for the side edges of said cloth, **characterized in that** the winding shaft is mounted on a frame extension connected to the frame, substantially outside the projection of the frame, wherein two pivoting arms are connected to said frame extension, which pivoting arms include guide elements for the side edges of the cloth and which are capable of pivoting movement between an operating position, in which the guide elements are arranged in line with said guides, substantially connecting thereto, and a mounting position, in which said guide elements are disposed outside the projection of the frame.

2. An open roof construction according to claim 1, wherein the free front edge of the cloth includes a stiff end portion, **characterized in that** the guide elements of the pivoting arms are provided with stops for said end portion.

3. An open roof construction according to claim 2, **characterized in that** the position of the stops is such that the end portion and/or the cloth substantially cover(s) the frame portion directly adjacent to the frame extension in the operating position of the pivoting arms.

4. An open roof construction according to claim 1, 2 or 3, **characterized in that** the pivoting arms are also movable with respect to the frame extension between a first position, in which the guide elements thereof connect to the guides, and a second position, in which the guide elements are clear of the guides.

5. An open roof construction according to any one of the preceding claims, **characterized in that** said pivoting arms can be detached from said frame extension.

6. An open roof construction according to claim 5, **characterized in that** said pivoting arms and said frame extension are provided with mating hook means.

7. An open roof construction according to claim 6, **characterized in that** the hook means to be so constructed that it is only possible to detach the pivoting arms from the frame extension or connect the pivoting arms thereto if the angle between the pivoting arms and the plane of the frame exceeds a predetermined value.

8. An open roof construction according to claim 7, **characterized in that** said angle is at least 90 .
